# EUROPEAN PATENT APPLICATION

(11) **EP 3 296 233 A1**
(43) Date of publication of application: **21.03.2018**
(21) Application number: 16203615.6
(22) Date of filing: 13.12.2016
(51) Int. Cl.: B65G 1/02, A47B 47/02, A47B 57/40, A47B 57/50, A47B 96/06

(54) **A DEVICE FOR SUPPORTING PALLETS AND A METHOD FOR PROVIDING SUCH A DEVICE**

(30) Priority: 20.09.2016 SE 1651242
(71) Applicant: AJ Produkter AB, 301 82 Halmstad (SE)
(72) Inventor: Sesana, Stefano, 20124 Milano (IT)
(74) Representative: Persson, Albin

(57) **Abstract**

A device (10) for supporting goods supports (11), comprising a plurality of columns (12) and a plurality of beams (13) attachable to the columns, wherein each column (12) comprises a front section (16) having a plurality of holes (15), and wherein each beam (13) comprises a top side (30) for supporting the goods support (11) and is provided, in its ends, with fastening elements (14) having hooks (33) for interaction with the holes (15) in the front section (16) of the columns (12) for attachment thereto. The fastening elements (14) comprise a section (31) projecting from the beam (13), which projecting section (31) extends substantially in a plane perpendicular to the top side (30) of the beam (13) and in the longitudinal direction of the beam (13) to engage the front section (16) of the column (12). The holes (15) are arranged with a wider upper part (24) and a tapering lower part (25) for receiving and securing the hooks (33). The hooks (33) are arranged tapering downward and are inclined obliquely downward from the projecting section (31) to secure the beams (13) to the columns (12) by means of gravity. The invention is also related to a method for providing such a device.

## Description

### FIELD OF THE INVENTION

The invention relates to a device for supporting goods supports. More specifically the present invention relates to a device for supporting good supports, comprising a plurality of columns and a plurality of beams attachable to the columns to form a rack for the goods supports, so that the goods supports can be positioned in the rack. This type of devices is generally used within different fields of industry to store goods supports in the form of pallets, different types of containers and other types of goods supports, with or without goods arranged on the goods support. For example, this type of devices is commonly used in warehouses to provide pallet racks for storing goods arranged on pallets. Such pallet racks can be arranged to support pallets in multiple levels above each other and in a desired number laterally. The present invention also relates to a method for providing such a device.

### PRIOR ART

A plurality of different types of devices for supporting goods supports, such as pallet racks for storing goods arranged on pallets, is disclosed in the prior art. One type of prior art pallet racks comprises a plurality of columns and a plurality of beams connected to the columns, wherein the beams extend horizontally between the columns, so that the pallets can be positioned on top of the beams. The beams can be connected to the columns in a variety of different ways, such as by means of screws, hooks, etc.

Despite a vast number of prior art solutions there is a need for a device for supporting goods supports having improved stability and improved structure for simple and efficient assembly.

Hence, one problem with many devices for supporting goods supports is that they are time-consuming and complicated to install.

Another problem with such prior art devices is that they lack in stability and/or ability to support loads sufficiently.

### BRIEF DESCRIPTION OF THE INVENTION

One object of the present invention is to avoid the problems of prior art indicated above and provide a stable and safe device for supporting goods supports which also is simple and efficient to assemble.

The present invention relates to a device for supporting goods supports, comprising a plurality of columns and a plurality of beams attachable to the columns, wherein each column comprises a front section having a plurality of holes and is arranged between two opposite side sections, and wherein each beam comprises a top side for supporting the goods support and is provided, in its ends, with fastening elements having hooks for interaction with the holes in the front section of the columns for attachment thereto, characterised in that the fastening elements comprise a section projecting from the beam, which projecting section extends substantially in a plane perpendicular to the top side of the beam and in the longitudinal direction of the beam to engage the front section of the column, that the holes are arranged with a wider upper part and a tapering lower part for receiving and securing the hooks, and that the hooks are arranged tapering downward and are inclined obliquely downward from the projecting section to secure the beams to the columns by means of gravity. The beam with the projecting section and the hooks arranged therein in combination with the configuration of the hooks and the holes result in a stable device for supporting goods supports, such as pallet racks, which is simple to assemble. The hooks and the holes are arranged so that the hooks engage behind the front section for securing the beam while the configuration of the hooks obliquely downward result in that the fastening element is forced against the front section by the weight of the beam and the load arranged thereon. The hooks have an upper portion with a width substantially corresponding to a lower edge of the holes. Further, the holes can be arranged with a shoulder between the upper part and the lower part to provide a substantial area of the upper part to facilitate insertion of the hooks while efficient guiding towards the tapering lower part of the holes simultaneously is provided.

The projecting section of the fastening element can be provided with an inclined outer edge portion while the front section can be arranged with a central groove, extending in the longitudinal direction of the column, for receiving said edge portion. Hence, further stability of the device is provided while the groove can contribute to guiding the fastening element to correct position in relation to the front section.

Further, the fastening element can comprise a plate for engaging a side section of the column, said plate being arranged perpendicular to the longitudinal direction of the beam and perpendicular to the projecting section. This also results in additionally improved stability. The projecting section of the fastening element for engaging the front section of the column in combination with the plate of the fastening element for engaging the side section of the column result in a very stable device.

The front section of the column can be arranged with a first set of holes and a second set of holes arranged in parallel to the first set of holes, which sets of holes can extend along the column, for example on each side of the groove arranged centrally and along the column, for attachment to different beams. Hence, the column can easily and effectively be connected to beams extending in opposite directions from the column to form a device having the desired width.

The invention also relates to a method for providing a device (10) for supporting load supports, comprising the steps of
a) erecting a plurality of columns in a spaced apart manner, said columns having a front section, two opposite side sections and holes arranged in the front section,
b) bringing a beam towards two columns, said beam having a top side for supporting the load support and having fastening elements in its ends,
c) engaging a projecting section of the fastening elements with the columns, said projecting section projecting in the longitudinal direction of the beam and perpendicular to the top side of the beam,
d) inserting hooks of the projecting section of the fastening element into a wider upper part of the holes in the columns, said hooks being inclined obliquely downward,
e) bringing the hooks downward and into a tapering lower part of the holes while securing the beams to the columns by means of gravity.

Further characteristics and advantages of the present invention will become apparent from the description of the embodiments below, the appended drawings and the dependent claims.

### SHORT DESCRIPTION OF THE DRAWINGS

The invention will now be described in more detail with the aid of exemplary embodiments and with reference to the accompanying drawings, in which
Fig. 1 is a schematic view of a device for supporting goods supports according to one embodiment, which illustrates columns and beams having fastening elements of the device, and goods supports in the form of pallets arranged on the beams, wherein some of the pallets are illustrated with goods and some without goods,
Fig. 2a is a schematic view of a part of a column according to one embodiment, which illustrates a front section of the column and a hole pattern arranged therein,
Fig. 2b is a schematic view of a side section of the column according to one embodiment, which illustrates a hole pattern arranged in the side section,
Fig. 3 is a schematic view from above of the column according to one embodiment, which illustrates a profile of the column and a groove arranged in the front section,
Fig. 4 is a schematic cross section view of the column according to one embodiment, which illustrates one example of different dimensions and angles of the column,
Fig. 5 is a drawing of a part of the front section of the column according to one embodiment, which illustrates one example of different dimensions of the front section,
Fig. 6 is a drawing of a part of the side section of the column according to one embodiment, which illustrates one example of different dimensions of the side section,
Fig. 7 is a schematic view of a hole in the front section of the column, which illustrates the configuration of the hole more in detail,
Fig. 8 is a drawing of the hole of Fig. 7, which illustrates one example of dimensions of the hole,
Fig. 9 and Fig. 10 are schematic perspective views of a beam of the device according to one embodiment, which illustrates fastening elements connected to the beam,
Fig. 11 is a schematic view of the beam with its fastening elements according to one embodiment,
Fig. 12 is a schematic view from above of the beam with fastening elements according to Fig. 11,
Fig. 13 is a schematic view of a part of the beam and one of its fastening elements according to one embodiment, which illustrates the fastening element and hooks of the fastening element more in detail,
Fig. 14 is a drawing of a part of the beam and one of its fastening elements, which illustrates one example of different dimensions of the fastening element,
Fig. 15 is a schematic section view of the fastening element according to one embodiment, which illustrates the configuration of the hooks more in detail,
Fig. 16 is a drawing of the fastening element of Fig. 15, which illustrates one example of different dimensions of the fastening element,
Fig. 17 is a schematic section view of a part of the fastening element according to one embodiment, which illustrates a hook more in detail and one example of dimensions of it,
Figs. 18 and 19 are schematic drawings of a column and a part of a beam with fastening element, seen from above, which illustrates engagement of the fastening element with the column to connect the beam to it, and
Fig. 20 is a schematic view of a column and two beams having fastening elements connected therewith.

### THE INVENTION

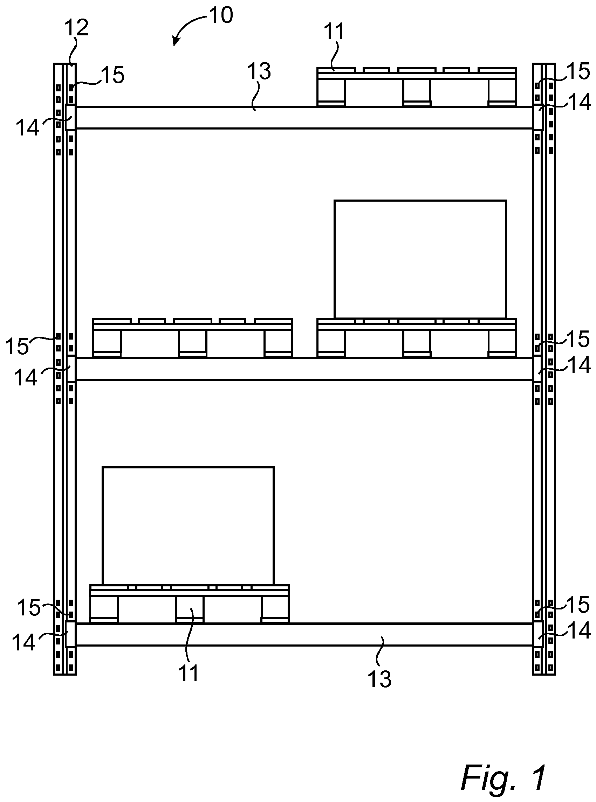

With reference to Fig. 1 a device 10 for supporting goods supports 11 is illustrated schematically according to one embodiment. The device 10 comprises a plurality of columns 12 and a plurality of beams 13 connected to the columns 12 to form a rack for the goods supports 11. For example, the device 10 is arranged in the form of a pallet rack for supporting goods supports in the form of pallets, containers or corresponding types of good supports. For example, the device 10 is arranged for supporting goods supports with or without goods. The device 10 comprises a front and a rear set of columns 12 and at least one front beam 13 and at least one rear beam 13, wherein a front and rear beam 13 is arranged at the same level and wherein a plurality of front and rear beams 13 can form different levels for supporting a plurality of goods supports in corresponding levels. For example, the device 10 comprises a plurality of beams 13 arranged at different levels for supporting goods supports 11 in corresponding different levels. The front and rear sets of columns 12 are, for example, connected to each other in a conventional manner, such as by means of struts, beams or similar. In Fig. 1 one example of a device 10 having two front columns 12, which are connected to each other by means of the beams 13 in desired number of levels, wherein corresponding rear columns 12 and beams 13 are covered by their front counterparts. The device 10 can comprise any number of columns 12 and beams 13 distributed laterally to form a device 10 with desired width. The beams 13 are connected to the columns 12 by means of fastening elements 14 arranged at ends of the beams 13, said fastening elements 14 being arranged for interaction with holes 15 arranged in the columns 12, which is described in more detail below.

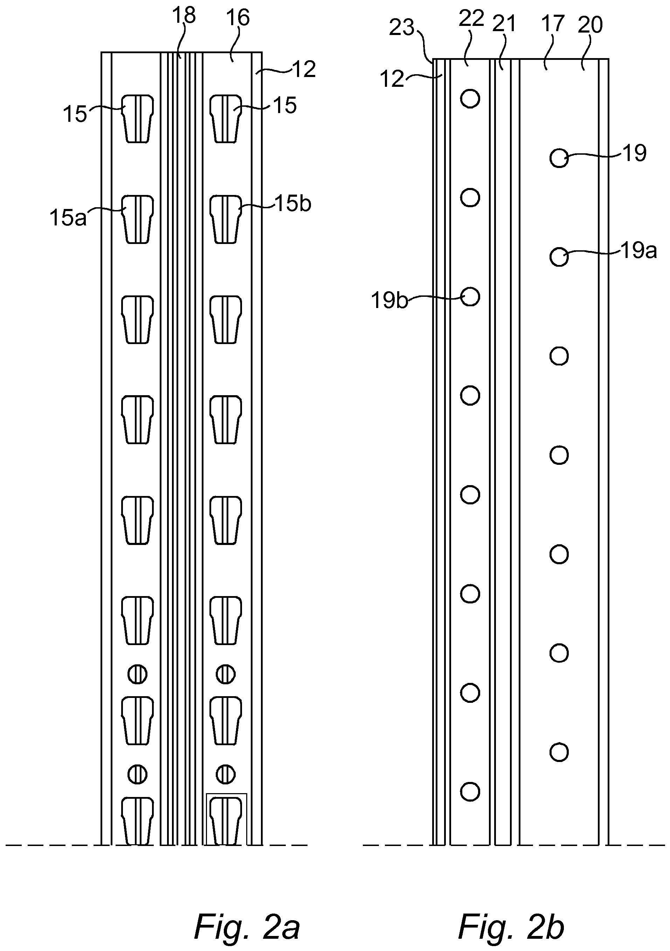

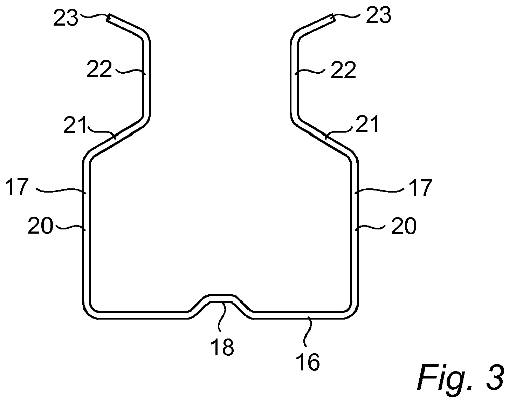

With reference to Fig. 2a and Fig. 2b the column 12 is illustrated more in detail according to one embodiment, wherein a front section 16 of the column 12 is illustrated in Fig. 2a and a side section 17 of the column 12 is illustrated in Fig. 2b. In Fig. 3 the column 12 is illustrated from above. Hence, the column 12 comprises the front section 16 and two opposite side sections 17 connected to the front section 16. The column 12 is, for example, arranged as a hollow profile of metal, such as steel, aluminum or similar. Alternatively, the column 12 is arranged in plastic materials. In the illustrated embodiment, each of the side sections 17 are connected to a long side of the front section 16. For example, the side sections 17 have a free long side, as illustrated in Fig. 3. For example, the side sections 17 are arranged substantially perpendicular to the front section 16.

With reference to particularly Fig. 2a the front section 16 is arranged with the holes 15 for interaction with the fastening elements 14 of the beams 13, so that the beams 13 can be connected to the columns 12 to form the device 10. For example, the holes 15 are distributed along the longitudinal direction of the column 12, so that the beam 13 is attachable to the column 12 at the desired height. In the illustrated embodiment, the column 12 comprises a first set of holes 15a and a second set of holes 15b arranged in parallel to the first set of holes 15a, wherein both sets of holes 15a, 15b extend in the longitudinal direction of the column 12 and are spaced apart in a direction perpendicular to the longitudinal direction of the column 12 to make it possible to attach beams 13 extending in different directions from the column 12. Hence, the first set of holes 15a is arranged for connection with the fastening element 14 of a first beam 13, which extends horizontally in a first direction from the column 12, wherein the second set of holes 15b is arranged for connection with the fastening element 14 of a second beam 13, which extends horizontally in a second direction from the column 12 opposite to the first direction. As illustrated in Fig. 2a and Fig. 3 the front section 16 is, for example, arranged with a groove 18. In the illustrated embodiment, the groove 18 is arranged centrally along the column 12 between the first set of holes 15a and the second set of holes 15b, so that the two sets of holes 15a, 15b are arranged on opposite sides of the groove 18.

With reference to particularly Fig. 2b and Fig. 3 the side sections 17 are arranged with openings 19, such as through openings, for example for attachment with struts or similar to connect front and rear columns 12, which struts are not illustrated in the drawings. The openings 19 are arranged along the longitudinal direction of the column 12 and are distributed in a spaced apart manner. For example, the openings 19 are circular. As illustrated particularly in Fig. 3 the side sections 17 comprise a first portion 20 connected to the front portion 16 and extending perpendicular to the same. The side sections 17 further comprise a second portion 21 connected to the first portion 20 and extending inward and which, in the illustrated embodiment, is slanted obliquely inward, and a third portion 22 connected to the second portion 21. The second portion 21 is arranged between the first portion 20 and the third portion 22. The third portion 22 extends substantially in parallel to the first portion 20 and forms a thinner part of the column 12. For example, the third portion 22 is terminated with a free edge 23 inclined outward. In the illustrated embodiment, both of the side sections 17 are symmetrical. As illustrated in Fig. 2b a first set of openings 19a is arranged in the first portion 20 of the side section 17, wherein a second set of openings 19b is arranged in the third portion 22. The second set of openings 19b is, for example, displaced vertically in relation to the first set of openings 19a.

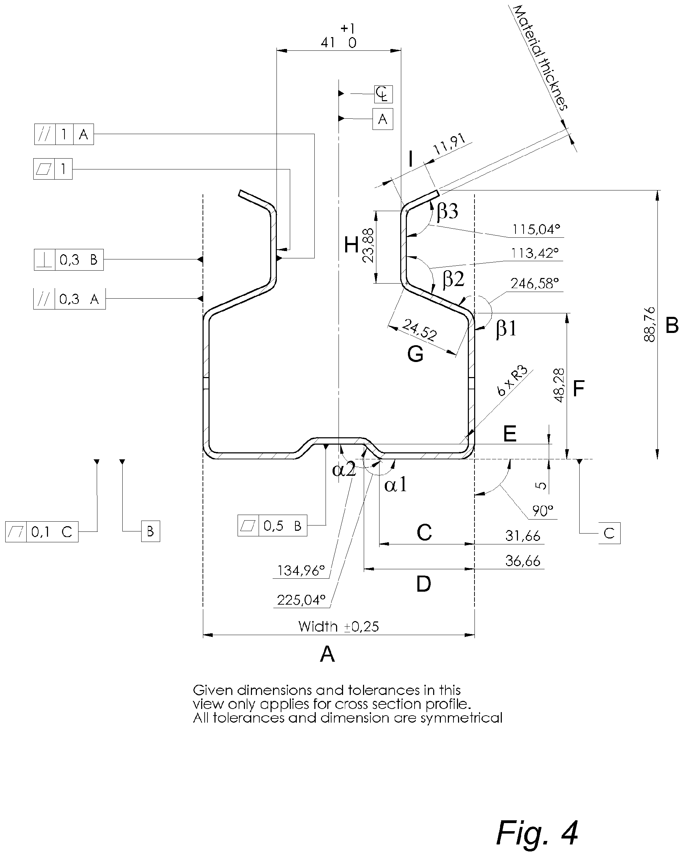

With reference to Fig. 4 the column 12 is illustrated in cross section with an example of dimensions. For example, a width A of the front section 16 is 70-100 mm, wherein a depth B of the column 12, for example, is 70-100 mm or about 90 mm or 88.76 mm as indicated. A distance C between the longitudinal edge and the groove 18 of the front section 16 is, for example, 20-40 mm or about 30 mm, such as the indicated 31.66 mm, wherein a distance D between the longitudinal edge of the front section 16 and a position in which the groove 18 has reached maximum depth is about 5 mm longer than the distance C. A depth E of the groove 18 is, for example, 2-10 mm, such as about 5 mm. An angle α1 between an inclined edge portion of the groove 18 and portions of the front section adjacent the groove 18 is, for example, 200-250° or about 200-230°, such as the indicated 225.04°, wherein an angle α2 between a level center portion of the groove 18 and portions of the front section 16 adjacent the groove 18 is, for example, 100-160° or about 135°, such as the indicated 134.96°. The first portion 20 of the side section 17 is arranged with a width F of, for example, 40-60 mm or about 50 mm, such as the indicated 48.28 mm, wherein the second portion 21 is arranged with a width G of, for example, 20-30 mm, or about 25 mm, such as the indicated 24.52 mm. The third portion 22 is arranged with a width H of, for example, 20-30 mm or about 25 mm, such as the indicated 23.88 mm, wherein the outward inclined edge portion is arranged with a width I of, for example, 5-20 mm or about 10 mm, such as the indicated 11.91 mm. For example, the second portion 21 is arranged in an angle β1 in relation to the first portion 20 of about 200-270° or about 250°, such as the indicated 246.58°, wherein an angle β2 between the second portion 21 and the third portion 21 is, for example, 90-160° or 100-120°, such as the indicated 113.42°. For example, the third portion is inclined outward in its free edge with an angle β3 of 90-150° or 100-120°, such as the indicated 115.04°.

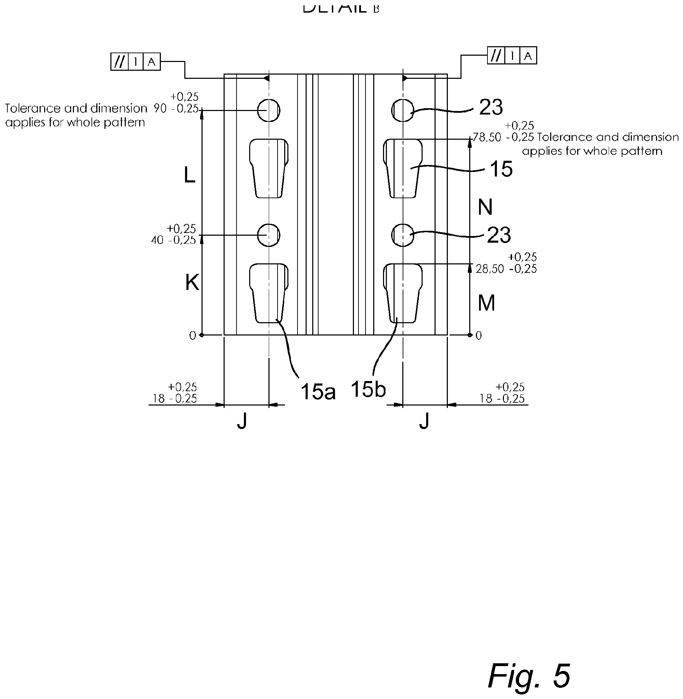

With reference to Fig. 5 a part of the front section 16 of the column 12 and the configuration of the holes 15 arranged therein are illustrated. In the embodiment of Fig. 5 through apertures 23 are arranged between the holes 15, wherein the apertures 23 are distributed along the column 12. For example, the apertures 23 are aligned with each of the sets of holes 15a, 15b. In the embodiment of Fig. 5 the holes 15 and the apertures 23 are arranged with a distance J from their center line to the outer edge of the front section. For example, the distance J is 15-20 mm or about 18 mm. A lower aperture 23 has its center point arranged a distance K from the lower edge of the front section 16, wherein the distance K, for example, is 30-50 mm or about 40 mm. A distance L from the lower edge of the front section 16 to the center point of the next aperture 23 is, for example, 80-100 mm, such as about 90 mm, wherein a distance between adjacent center points of the apertures 23 is, for example, 50 mm. A distance M from the lower edge of the front section to an upper edge of a lower hole 15 is, for example, 25-30 mm, such as 28.5 mm, wherein a distance N from the lower edge of the front section to the upper edge of the next hole 15 is, for example, 70-90 mm, such as 78.5 mm. Hence, a distance between the upper edges of the holes 15 is, for example, 40-60 mm or about 50 mm.

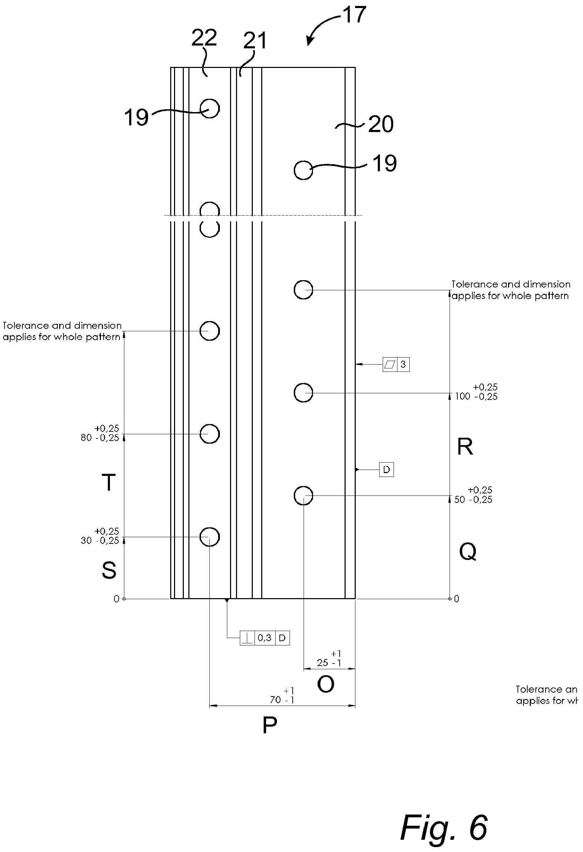

With reference to Fig. 6 a side section 17 of the column 12 is illustrated according to one embodiment, wherein a center point of the openings 19 in the first portion 20 is arranged at a distance O from the connecting edge of the side section 17 to the front section 16. For example, the distance O is 20-30 mm or about 25 mm. A distance P from said edge to a center point of the openings 19 in the third portion 22 is, for example, 60-80 mm or about 70 mm. The distance Q from a lower end of the column 12 to the center point of a lower opening in the first portion 20 is, for example, 40-60 mm or about 50 mm, wherein a distance R from said edge to the center point of the next opening 19 in the first portion 20 is, for example, 80-120 mm or about 100 mm, so that a distance between the center points of the openings 19 in the first portion 20 is 50 mm. A distance S from the lower end of the column 12 to a center point of a lower opening 19 in the third portion 22 is, for example, 20-40 mm or about 30 mm, wherein a distance T from said end to the center point of the next opening 19 in the third portion 22 is, for example, 60-100 mm or about 80 mm, so that a distance between the center points of the openings 19 in the third portion 22 is 50 mm and so that the openings 19 in the third portion 22 are displaced in the longitudinal direction of the column 12 in relation to the openings 19 in the first portion 20.

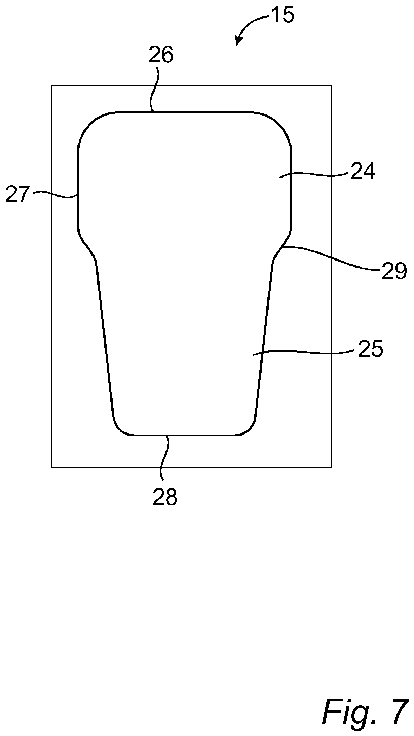

With reference to Fig. 7 the configuration of a hole 15 is illustrated schematically according to one embodiment. The hole 15 is arranged with a wider upper part 24 and a narrower lower part 25. The lower part 25 is tapered downward. In the illustrated embodiment, the upper part 24 is arranged with a substantially constant width, apart from an optional rounded shape in its upper corners. In the illustrated embodiment, an upper edge 26 of the upper part 24 is straight and substantially horizontal, wherein side edges 27 of the upper part 24 are vertical and parallel. For example, the lower part 25 is arranged with a substantially straight and horizontal lower edge 28. Further, the holes 15 are arranged with a shoulder 29 between the upper part 24 of the hole 15 and its lower part 25. The shoulder 29 is formed by an inwardly slanted portion between the lower part 25 and the upper part 24 of the hole 15, which results in a tapering of the hole 15, which tapering is larger than that of the lower part 25 of the hole 15.

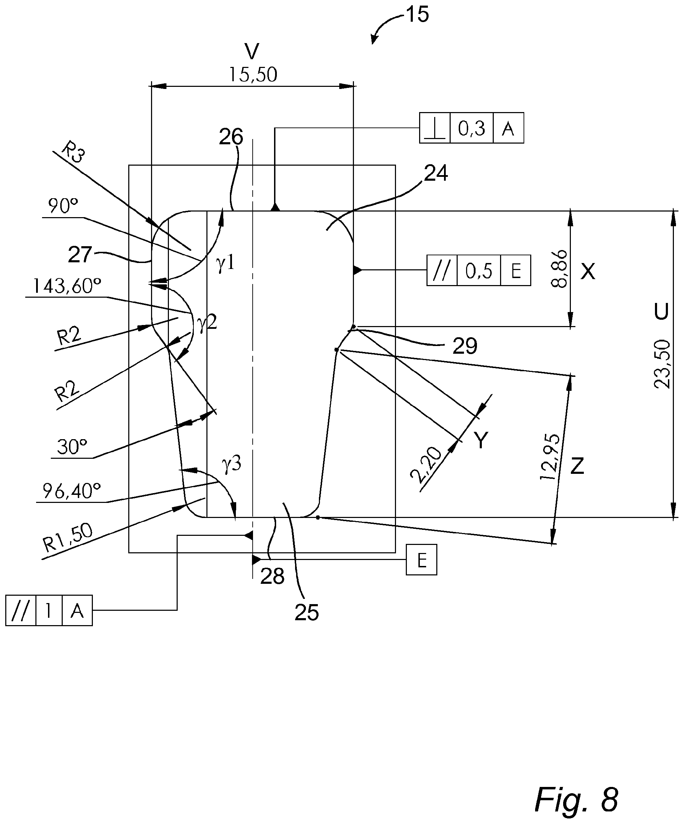

With reference to Fig. 8 the hole 15 is illustrated according to one embodiment in which a height U of the hole 15, from its upper edge 26 to its lower edge 28, for example is 20-30 mm or about 25 mm, such as 23.5 mm. A width V of the upper part 24 of the hole 15, between the side edges 27 of the upper part 24, is, for example, 10-20 mm or about 15 mm, such as 15.5 mm. The upper part 24 is, for example, arranged with a height X of 5-15 mm or about 10 mm, such as 8.86 mm, wherein a length Y of the shoulder 29, i.e. the inwards slanted portion between the upper part 24 and the lower part 25 of the hole 15, is, for example, 2-3 mm, such as 2.3 mm. The side edges of the lower part 24 are, for example, arranged with a length Z of 10-15 mm or about 13 mm, such as 12.95 mm. An angle γ1 between the upper edge 26 of the upper part 24 and each of the side edges 27 is, for example, 90°, wherein an angle γ2 between said side edges 27 and the slanted portion forming the shoulder 29 is, for example, 90-160°, 120-160°, 13-150° or about 140-145°, such as 143.6°. An angle γ3 between the lower edge 28 of the lower part 25 and the inwardly inclined side edges of the lower part 25 is, for example, more than 90°, such as 95-100° or 96.4°.

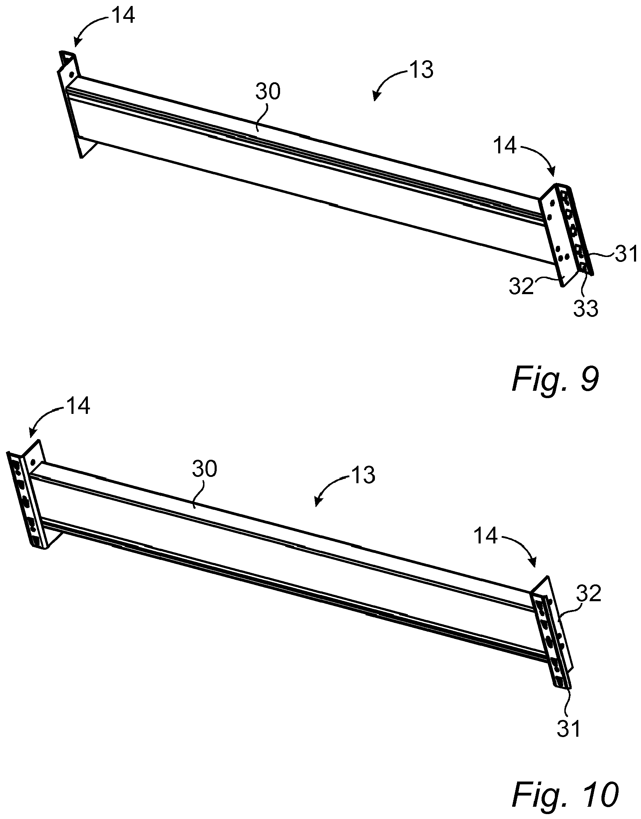

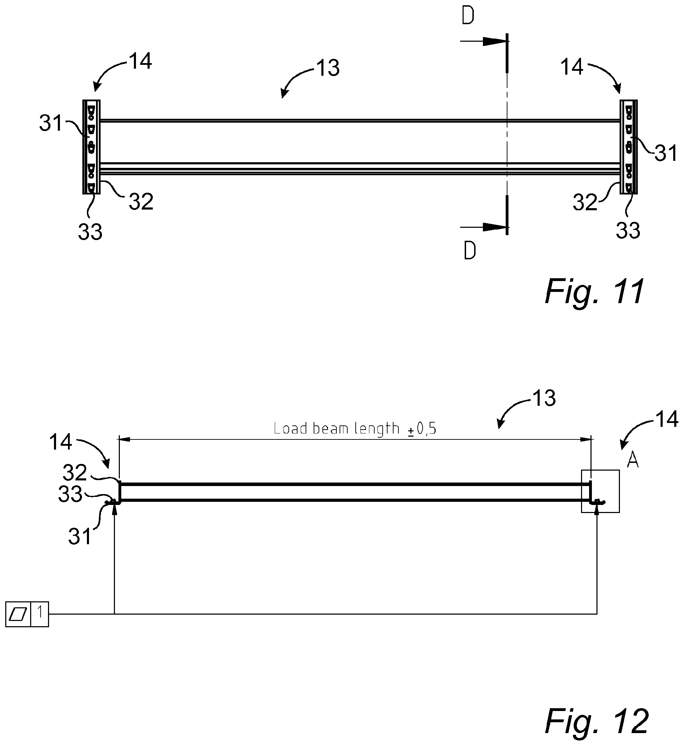

With reference to Figs. 9-12 and 10 the beam 13 with the fastening elements 14 is illustrated according to one embodiment. One fastening element 14 is arranged in each end of the beam 13. The beam 13 is straight and has a top side 30 for engaging a bottom side of the goods support to support it. For example, both of the fastening elements 14 are arranged in a corresponding manner. The fastening elements 14 comprise a section 31 projecting from the beam 13. The projecting section 31 extends in a plane perpendicular to the top side 30 of the beam 13 and in the longitudinal direction of the beam 13 and is arranged for engaging the front section 16 of the column 12. For example, the projecting section 31 extends substantially along a front side of the beam 13 and substantially forms an elongation of the front side of the beam 13. Hence, the projecting section 31 extends vertically. For example, the fastening element 14 also comprises a plate 32 arranged perpendicular to the longitudinal direction of the beam 13 and perpendicular to the projecting section 31, which plate 32 is arranged for engaging the side section 17 of the column 12. Hence, the plate 32 extends vertically in a plane perpendicular to the projecting section 31. The plate 32 is connected to the beam 13, such as the end of the beam 13, wherein the projecting section 31 is connected to the plate 32. For example, the plate 32 substantially covers the end of the beam 13. For example, the plate 32 and the projecting section 31 are arranged in the form of an angle iron or similar. Hence, the fastening element 14 is arranged to engage both the front section 16 and one of the side sections 17 of the column 12, while the beam 13 extends between the side sections 17 of two columns 12. For example, the fastening element 14 is arranged to partially enclose a part of the column 12. The fastening elements 14 are arranged with hooks 33 for interaction with the holes 15 in the front section 16 of the columns 12 to connect the beam 13 to the columns 12. The hooks 33 project from the projecting section 31 on the same side as the plate 32.

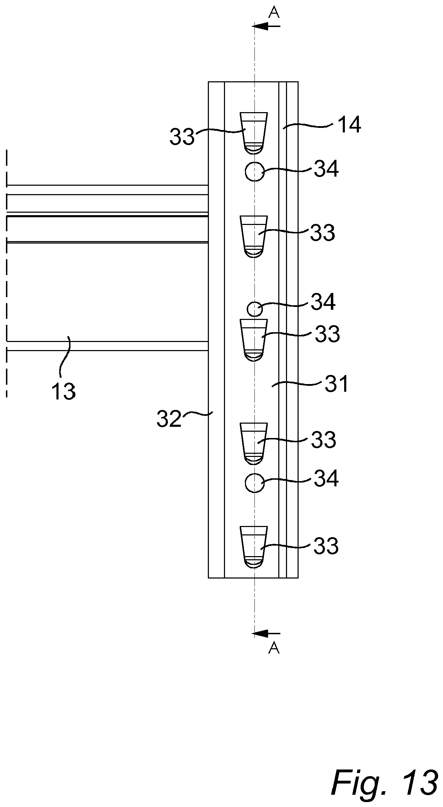

With reference to Fig. 13 a fastening element 14 and a part of the beam 13 are illustrated according to one embodiment. The fastening element 14 comprises a plurality of hooks 33. In the illustrated embodiment, the fastening element 14 comprises five hooks 33. Alternatively, the fastening element 14 comprises any number of hooks 33, such as from two to six or ten hooks 33. The hooks 33 are distributed on the projecting section 31, such as from one end to the opposite end in the vertical direction. For example, the hooks 33 are distributed along a line extending perpendicular to a plane of the top side 30 of the beam 13 to form a row. The hooks 33 are spaced apart in the vertical direction. The hooks 33 are tapered downward, wherein the hooks 33 are formed with a wider upper portion and a narrower lower portion. For example, the hooks 33 are arranged with a rounded lower edge. In the illustrated embodiment, the fastening elements 14 are arranged with through apertures 34, which are arranged between the hooks 33 in the projecting section 31. For example, the apertures 34 are circular.

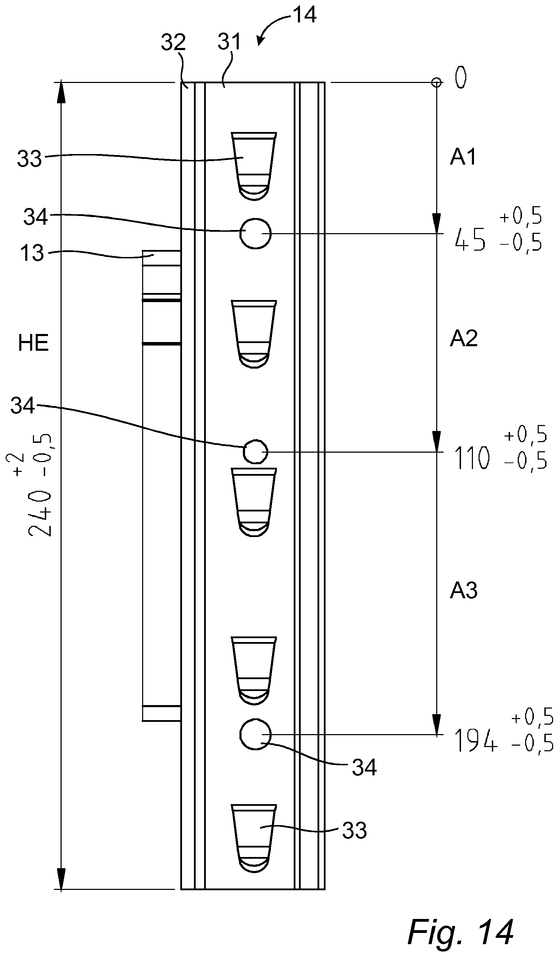

With reference to Fig. 14 the fastening element 14 and a part of the beam 13 are illustrated according to one embodiment in which the fastening element 14 is arranged with a height HE of 200-300 mm or about 250 mm, such as 240 mm. For example, the projecting section 31 of the fastening element 14 is substantially rectangular. Also, the plate 32 is, for example, substantially rectangular. For example, a center point of an upper aperture 34 is arranged at a distance A1 from the upper edge of the fastening element 14, wherein the distance A1 is 30-60 mm, 40-50 mm or about 45 mm. A distance A2 from the center point of the next aperture 34 and said upper edge of the fastening element 14 is, for example, 80-150 mm, 100-120 mm or about 110 mm, wherein a distance A3 to the center point of a consecutively next and lower aperture 34 from the upper edge of the fastening element 14 is 180-220 mm, 190-200 mm or about 195 or 194 mm. For example, the projecting section 31 is arranged with three apertures 34. For example, the aperture 34 in the middle is smaller than the other apertures 34.

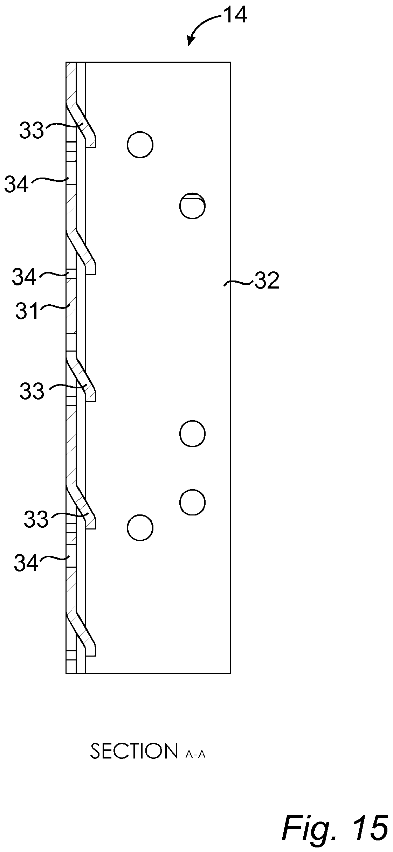

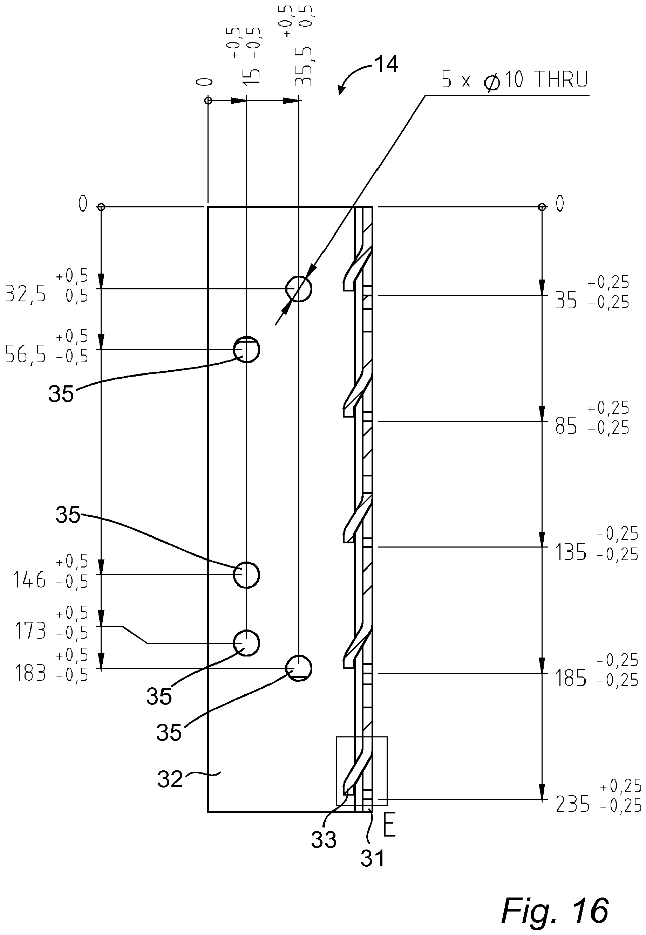

With reference to Figs. 15 and 16 the fastening element 14 is illustrated from the side with the projecting section 31 in section. As illustrated in Figs. 15 and 16 the hooks 33 are inclined obliquely inward and downward from the projecting section 31, wherein the hooks 33 project on the same side as the plate 32. The hooks 33 are arranged to interact with the holes 15 in the front section 16 of the column 12. The hooks 33 are arranged with a distance to each other corresponding to the distance between the holes 15. For example, the hooks 33 are arranged with a distance to each other between their lower edges of 40-60 mm or about 50 mm. In the illustrated embodiment, also the plate 32 is arranged with through apertures 35.

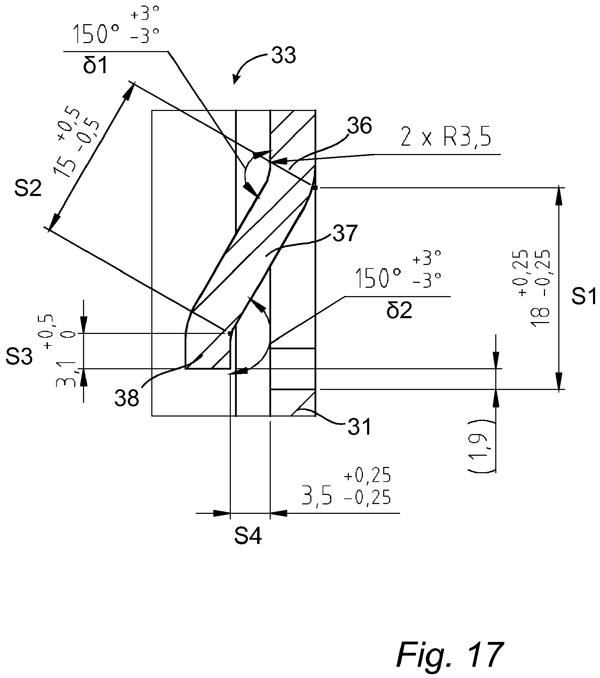

In Fig. 17 a part of the fastening element 14 with a hook 33 is illustrated. In the illustrated embodiment, the hooks 33 are formed by cutting out and bending out portions of the projecting section 31. For example, the projecting section is arranged in the form of a plate of metal or other suitable material. Hence, each of the hooks 33 comprises an upper portion 36, a slanted middle portion 37 and a lower portion 38, wherein the upper portion 36 is connected to the remaining part of the projecting section 31. The slanted middle portion 37 extends obliquely downward and outward from the remaining part of the projecting section 31. For example, the hook 33 is formed by a distance S2 of the projecting section 31 of 10-30 mm, 15-20 mm or about 18 mm to form a hook 33 having a slanted middle portion 37 with a length S2 of 8-28 mm, 10-20 mm or about 15 mm and a lower portion 38 with a length S3 of 2-5 mm or about 3 mm. In the illustrated embodiment, the lower portion 38 is arranged substantially in parallel to the remaining part of the projecting section 31 and extends substantially vertically. The slanted middle portion 37 is arranged with an angle δ1 to the remaining part of the projecting section 31 and a vertical plane to secure the beams 13 to the columns 12 by means of gravity. Hence, the hooks 33 are inclined obliquely outward and downward to be inserted into the holes 15 and there interact with the columns 12, so that the fastening elements 14 are forced towards the beams 13 by means of gravity. For example, the angle δ1 is 120-170°, 140-160° or about 150°. Then, the lower portion 38 is arranged with an angle δ2 to the slanted middle portion 37 of 120-170°, 140-160° or about 150°. For example, the hook 33 is arranged obliquely projecting while forming a gap S4 in the horizontal direction between the lower portion 38 and the remaining part of the projecting section 31 of 2-5 mm, 3-4 mm or about 3.5 mm.

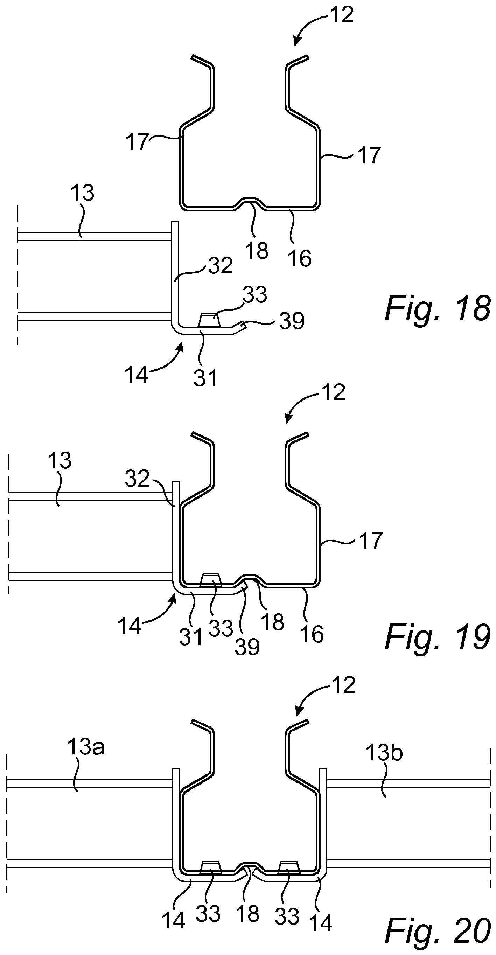

With reference to Figs. 18-20 mounting of a beam 13 to a column 12 is illustrated schematically according to one embodiment. A plurality of columns 12, such as at least two or four columns 12, are erected, wherein a beam 13 with fastening elements 14 in its ends is brought towards a column 12, so that the projecting section 31 is brought towards the front section 16 and the plate 32 is brought along a side section 17 of the column 12. In Figs. 18 and 19 an end portion of a beam 13 with the fastening element 14 and a column 12 are illustrated seen from above. The hooks 33 of the fastening element 14 are inserted into the upper part 24 of the holes 15, for example until the projecting section 31 engages the front section 16, after which the beam 13 and the fastening element 14 is brought downward so that the hooks 33 are brought into the narrower lower part 25 of the holes 15, wherein the side edges of the hooks 33 are brought behind the front section 16 of the holes 15 for securing the fastening element 14 to the front section 16. Simultaneously, the slanted middle portion 37 of the hooks 33 are brought to engage the lower edge 28 of the holes 15 and guide the fastening element 14 towards the front section 16 until the projecting portion 31 engages the front section 16 and the plate 32 engages the side section 17.

As illustrated in Figs. 18-19 the projecting section 31 is provided with an inclined outer edge portion 39 to project into the groove 18 in the front section 16. Hence, the groove 18 is arranged for receiving the inclined outer edge portion 39 to guide the fastening element 14 in position and to stabilize the connection between the column 12 and the fastening element 14. Hence, the inclined outer edge portion 39 projects at least partially in the same direction as the hooks 33 and the plate 32, i.e. in a direction perpendicular to the longitudinal direction of the beam 13.

Fig. 20 illustrates a part of a first beam 13a with a fastening element 14 and a part of a second beam 13b with a fastening element 14, wherein both the fastening element 14 of the first beam 13a and the fastening element 14 of the second beam 13b are connected to the same column 12. Hence, the hooks 33 of one of the fastening elements 14 of the first beam 13a are inserted into the first set of holes 15a of the column 12, wherein the hooks 33 of one of the fastening elements 14 of the second beam 13b are inserted into the second set of holes 15b of the column 12, so that the column 12 is connected to two beams 13a, 13b, which for example extend horizontally in opposite directions from the column 12.

## Claims

1. A device (10) for supporting goods supports (11), comprising a plurality of columns (12) and a plurality of beams (13) connectable to the columns, wherein each column (12) comprises a front section (16) having a plurality of holes (15) and is arranged between two opposite side sections (17), and wherein each beam (13) comprises a top side (30) for supporting the goods support (11) and is provided, in its ends, with fastening elements (14) having hooks (33) for interaction with the holes (15) in the front section (16) of the columns (12) for attachment thereto,
***characterised* in**
**that** the fastening elements (14) comprise a section (31) projecting from the beam (13), which projecting section (31) extends substantially in a plane perpendicular to the top side (30) of the beam (13) and in the longitudinal direction of the beam (13) to engage the front section (16) of the column (12),
**that** the holes (15) are arranged with a wider upper part (24) and a tapering lower part (25) for receiving and securing the hooks (33), and
**that** the hooks (33) are arranged tapering downward and are inclined obliquely downward from the projecting section (31) to secure the beams (13) to the columns (12) by means of gravity.

2. The device of claim 1, wherein the upper portion (36) of the hooks (33) are arranged with a width substantially corresponding to a width of a lower edge (28) of the lower part (25) of the holes (15).

3. The device of claim 1 or 2, wherein the holes (15) are arranged with a shoulder (29) between the wider upper part (24) and the tapering lower part (25).

4. The device of any of the preceding claims, wherein the projecting section (31) of the fastening element (14) is provided with an inclined outer edge portion (39), and wherein the front section (16) is arranged with a central groove (18) for receiving said edge portion (39) and extending in the longitudinal direction of the column (12).

5. The device according to any of the preceding claims, wherein the fastening element (14) comprises a plate (32) for engaging a side section (17) of the column (12), said plate (32) being arranged perpendicular to the longitudinal direction of the beam (13) and perpendicular to the projecting section (31).

6. The device according to any of the preceding claims, wherein the front section (16) of the column (12) is arranged with a first set of holes (15a) and a second set of holes (15b) arranged in parallel to the first set of holes (15a), which sets of holes (15a, 15b) extend along the column (12) and are spaced apart in a direction perpendicular to the longitudinal direction of the column (12) for attachment to different beams (13a, 13b).

7. The device according to any of the preceding claims, wherein a plurality of columns (12) and beams (13) having fastening elements (14) are connected to each other to form a pallet rack for supporting load supports (11) in the form of pallets.

8. A method for providing a device (10) for supporting load supports (11), comprising the steps of
a) erecting a plurality of columns (12) in a spaced apart manner, said columns (12) having a front section (16), two opposite side sections (17) and holes (15) arranged in the front section (16),
b) bringing a beam (13) towards two columns (12), said beam (13) having a top side (30) for supporting the load support (11) and having fastening elements (14) in its ends,
c) engaging a projecting section (31) of the fastening elements (14) with the columns (12), said projecting section (31) projecting in the longitudinal direction of the beam (13) and perpendicular to the top side of the beam (13),
d) inserting hooks (33) of the projecting section (31) of the fastening elements (14) into a wider upper part (24) of the holes (15) in the columns (12), said hooks (33) being inclined obliquely downward,
e) bringing the hooks (33) downward and into a tapering lower part (25) of the holes (15) while securing the beams (13) to the columns (12) by means of gravity.

9. The method of claim 8, comprising the step of arranging an inclined outer edge portion (39) of the projecting section (31) of the fastening element (14) in a groove (18) arranged centrally and extending along the column (12).

10. The method of claim 8 or 9, comprising the step of engaging a plate (32), arranged perpendicular to the longitudinal direction of the beam (13) and extending perpendicular to the projecting section (31), with a side section (17) of the column (12).

11. The method of any of claims 8-10, comprising the steps of inserting hooks (33) of a fastening element (14) connected to a first beam (13a) into a first set of holes (15a) in the front section (16) of the column (12), and inserting hooks (33) of a fastening element (14) connected to another beam (13b) into a second set of holes (15b) in the front section (16) of the column (12), said second set of holes (15b) being arranged in parallel to the first set of holes (15a).
